Europäisches Patentamt

European Patent Office

Office européen des brevets

(19)

(11) **EP 0 934 184 B1**

(12) **EUROPÄISCHE PATENTSCHRIFT**

(45) Veröffentlichungstag und Bekanntmachung des Hinweises auf die Patenterteilung:
**25.07.2001 Patentblatt 2001/30**

(21) Anmeldenummer: **97945781.9**

(22) Anmeldetag: **22.10.1997**

(51) Int Cl.$^7$: **B60R 21/32**, B60R 22/46

(86) Internationale Anmeldenummer:
**PCT/DE97/02462**

(87) Internationale Veröffentlichungsnummer:
**WO 98/18662 (07.05.1998 Gazette 1998/18)**

(54) **STEUERANORDNUNG FÜR EIN INSASSENSCHUTZSYSTEM ZUM SEITENAUFPRALLSCHUTZ IN EINEM FAHRZEUG**

CONTROL ARRANGEMENT FOR A PASSENGER-PROTECTION SYSTEM TO PROTECT AGAINST SIDE IMPACT IN A VEHICLE

SYSTEME DE COMMANDE POUR SYSTEME DE PROTECTION POUR LES OCCUPANTS D'UN VEHICULE CONTRE LES CHOCS LATERAUX

(84) Benannte Vertragsstaaten:
**DE FR GB IT**

(30) Priorität: **31.10.1996 DE 19645079**

(43) Veröffentlichungstag der Anmeldung:
**11.08.1999 Patentblatt 1999/32**

(73) Patentinhaber: **SIEMENS AKTIENGESELLSCHAFT
80333 München (DE)**

(72) Erfinder:
• **FRIMBERGER, Manfred
D-84061 Ergoldsbach (DE)**
• **MADER, Gerhard
D-93107 Thalmassing (DE)**

(56) Entgegenhaltungen:
EP-A- 0 342 401       EP-A- 0 517 253
WO-A-90/11207      WO-A-92/05979
DE-A- 3 816 588      DE-A- 4 244 264
DE-A- 4 318 350      GB-A- 2 263 571
US-A- 3 931 527      US-A- 4 166 641
US-A- 4 975 850

• **WETZEL G: "STEUERUNG EINES MEHRFACH-RUECKHALTESYSTEMS CONTROLS FOR A MULTIPLE PASSENGER RESTRAINT SYSTEM" ATZ AUTOMOBILTECHNISCHE ZEITSCHRIFT, Bd. 96, Nr. 10, Oktober 1994, Seite 618/619 XP000469483**

## Beschreibung

Die Erfindung betrifft eine Steueranordnung für ein Insassenschutzsystem zum Seitenaufprallschutz in einem Fahrzeug.

Aus der US 5 544 915 ist eine Steueranordnung für ein Insassenschutzsystem zum Seitenaufprallschutz in einem Fahrzeug bekannt, die einen in der linken Fahrzeughälfte angeordneten Querbeschleunigungsaufnehmer, einen in der rechten Fahrzeughälfte angeordneten Querbeschleunigungsaufnehmer und einen zentral im Fahrzeug angeordneten Querbeschleunigungsaufnehmer enthält. Die von diesen Querbeschleunigungsaufnehmern gelieferten Signale werden jeweils mit Schwellwerten verglichen. Abhängig vom Überschreiten der Schwellwerte durch die jeweiligen Signale werden beispielsweise die Seitenairbags ausgelöst.

Aus dem deutschen Gebrauchsmuster DE 90 01 803 ist eine Steueranordnung für ein Insassenschutzsystem zum Frontaufprallschutz offenbart. Das Insassenschutzsystem wird nur dann ausgelöst, wenn das von einem elektronischen Beschleunigungssensor gelieferte und in einer Auswerteeinrichtung ausgewertete Signal einen zum Auslösen des Airbags ausreichend schweren Unfall erkennen läßt und gleichzeitig ein mechanischer Beschleunigungsschalter - aufgrund seiner Schutzfunktion auch Safing-Sensor genannt - ein Freigabesignal liefert.

Ein solcher mechanischer Beschleunigungsschalter dient dem Schutz des Insassen vor einer Fehlauslösung des Airbags. Ohne seine Existenz könnte ein defekter elektronischer Beschleunigungssensor oder eine defekte Auswerteeinrichtung ein Steuersignal liefern und zum Auslösen des Airbags führen. Eine Fehlauslösung zieht zum einen hohe Reparaturkosten nach sich. Des weiteren kann der Insasse beispielsweise infolge der Lärmentwicklung beim Aufblasen des Airbags gesundheitlich beeinträchtigt werden. Überdies kann ein solches unerwartetes Aufblasen des Airbags eine unkontrollierte Fahrerreaktion und beispielsweise einen Unfall hervorrufen.

Der mechanische Beschleunigungsschalter benötigt keine Energieversorgung wie der elektrische Beschleunigungssensor. Er weist in der Regel eine magnetische seismische Masse auf, die bei Einwirken einer Beschleunigung ausgelenkt wird, und die nach einem festgelegten zurückgelegten Weg einen magnetisch steuerbaren Schalter betätigt. Die beschleunigungsabhängige Ansprechschwelle des mechanischen Beschleunigungsschalters ist relativ niedrig ausgebildet, so daß der Beschleunigungsschalter bei einem Unfall zu einem relativ frühen Zeitpunkt ein relativ lange andauerndes Freigabesignal erzeugt und damit ein Zeitfenster für das eigentliche von der Auswerteeinrichtung gelieferte Steuersignal vorgibt.

Da ein solcher mechanischer Beschleunigungsschalter als Schutzeinrichtung für die Steueranordnung eines Insassenschutzsystems nicht bzw nur unter großem Aufwand testbar ist, wird in der DE 40 16 644 A1 vorgeschlagen, den mechanischen Beschleunigungsschalter durch einen zweiten elektronischen Beschleunigungssensor und eine Schutzschaltung zu ersetzen. Das analoge Beschleunigungssignal des weiteren elektronischen Beschleunigungssensors wird in der analog ausgebildeten Schutzschaltung integriert und mit einem Schwellwert verglichen. Bei Überschreiten des Schwellwertes durch das integrierte Beschleunigungssignal wird ein Freigabesignal geliefert.

Aus der DE 44 03 502 A1 ist eine Steueranordnung bekannt, bei der ein als Safing-Sensor ausgebildeter mechanischer Beschleunigungsschalter durch einen elektronischen Beschleunigungssensor und eine Schutzschaltung ersetzt wird. Mit einer derart ausgebildeten Schutzeinrichtung soll das Verhalten eines mechanischen Beschleunigungsschalters, insbesondere eines "Ball-in-Tube-Sensors" aus der US 4 329 549, simuliert werden. Dazu wird ein konstanter Beschleunigungswert von dem vom Beschleunigungssensor gelieferten Beschleunigungssignal abgezogen, um eine Vorspannung einer fiktiven seismischen Masse eines mechanischen Beschleunigungsschalters zu simulieren. Unter Einwirkung der von dem elektronischen Beschleunigungssensor aufgenommenen Beschleunigung wird die fiktive seismische Masse des simulierten Beschleunigungsschalters ausgelenkt und liefert bei Überschreiten eines Schwellwerts ein Freigabesignal. Dementsprechend wird zur Simulation des Beschleunigungsschalters das gemessene Beschleunigungssignal abzüglich des die Vorspannung repräsentierenden Beschleunigungswertes in der Schutzschaltung integriert und mit einem Schwellwert verglichen.

Aus der US-A-4 970 850 ist weiterhin eine Steueranordnung für ein Insassenschutzsystem in einem Kraftfahrzeug bekannt, bei der eine Sensoranordnung eine auf das Fahrzeug einwirkende Längsbeschleunigung erfasst und ein Signal erzeugt, das an eine nachgeschaltete Auswerteeinrichtung geliefert wird. In dieser Auswerteeinrichtung wird das Beschleunigungssignal mehrfach ausgewertet, indem ein erstes und zweites Freigabesignal und aus dem zweiten ein drittes Freigabesignal gebildet wird.Ein Zeitglied sorgt dabei für eine Mindestdauer des zweiten Freibagesignals. Das Insassenschutzsytem wird in Abhängigkeit von einem aus ersten und dritten Freigabesignal gebildeten Steuersignal ausgelöst.

Aufgabe der Erfindung ist es, eine Steueranordnung für ein Insassenschutzsystem zum Seitenaufprallschutz zu schaffen, die eine wirksame Schutzeinrichtung aufweist.

Die Erfindung wird gelöst durch die Merkmale des Patentanspruchs 1.

Dabei wird das von einer Schutzeinrichtung der Steueranordnung querbeschleunigungsabhängig erzeugte Freigabesignal einem Zeitglied zugeführt. Das Zeitglied erzeugt aus dem zugeführten Freigabesignal ein Freigabesignal mit einer festgelegten Mindestdauer. Eine Freigäbeeinrichtung ist sowohl mit dem Zeitglied als auch mit der Auswerteeinrichtung verbunden, so daß ein Steuersignal erzeugt wird, wenn sowohl ein von der Auswerteeinrichtung erzeugtes erstes Freigabesignal als auch das aus dem Freigabesignal der Schutzeinrichtung abgeleitete Freigabesignal mit festgelegter Mindestdauer vorliegen.

Das Zeitglied trägt den besonderen Gegebenheiten bei einem Seitenaufprall Rechnung:

Zum einen ist eine Auslösung eines Seitenairbags innerhalb weniger Millisekunden ab Aufprallbeginn erforderlich, um den Insassen wirksam vor einer seitlich in das Fahrzeug eindringenden Struktur zu schützen. Im Gegensatz zum Frontaufprall weist das Fahrzeug bei einem Seitenaufprall keine ausgedehnte energieabbauende Knautschzone auf. Der Aufprallort ist nur wenige Zentimeter vom Insassen entfernt. Aus diesem Grund muß eine Auslöseentscheidung für einen Seitenairbag so früh als möglich aus einer aufgenommenen Querbeschleunigung abgeleitet werden. Dennoch muß aus der aufgenommen Querbeschleunigung abgeleitet werden, ob ein Aufblasen des Seitenairbags überhaupt erforderlich ist oder nicht. Bei einer Steueranordnung für ein Insassenschutzsystem zum Frontaufprallschutz verbleibt der Auswerteeinrichtung ca. 30 msec Zeit, um eine aufgenommene Längsbeschleunigung des Fahrzeugs zu bewerten und daraufhin eine positive oder negative Auslöseentscheidung fällen zu können. Das Aufblasen des Frontairbags zu einem dann bereits fortgeschrittenen Zeitpunkt ab Aufprallbeginn schützt aufgrund der energieabsorbierenden Knautschzone dennoch den Insassen wirksam vor Verletzungen. Den durch die Knautschzone bedingten Zeitgewinn kann die Auswerteeinrichtung für sich verbuchen.

Die zeitverschärften Anforderungen an eine Steueranordnung zum Seitenaufprallschutz betreffen nicht nur ihre Sensoranordnung und Auswerteeinrichtung sondern insbesondere auch ihre Schutzeinrichtung. Soll die Schutzeinrichtung zur Frontaufprallerkennung zumindest innerhalb der ersten etwa 20 bis 30 msec ein Freigabesignal liefern, muß das Freigabesignal einer Schutzeinrichtung zur Seitenaufprallerkennung bereits innerhalb der ersten fünf Millisekunden ihr Freigabesignal erzeugen, um ein wirksames Zeitfenster für das Freigabesignal der Auswerteeinrichtung zu liefern. Kann deshalb bei der Schutzeinrichtung zur Frontaufprallerkennung die Auslöseschwelle relativ hoch ausgebildet sein, so ist bei einer Schutzeinrichtung zur Seitenaufprallerkennung die für das Freigabesignal maßgebliche Auslöseschwelle sehr niedrig ausgebildet, um bereits innerhalb der ersten Millisekunden ab Aufprallbeginn ein Freigabesignal erzeugen zu können. Ist ein der Schutzeinrichtung zur Seitenaufprallerkennung zugeordneter Beschleunigungssensor/Beschleunigungsschalter zudem nicht in einem Fahrzeugseitenteil nahe am Aufprallort sondern zentral im Fahrzeug angeordnet, muß aufgrund einer schlechten Signalübertragung zwischen Fahrzeugseite und Fahrzeugmitte ggf die Auslöseschwelle nochmals abgesenkt werden.

Sowohl bei einem Frontaufprall als auch bei einem Seitenaufprall kann die auf das Fahrzeug einwirkende Beschleunigung nun derart ausgebildet sein, daß zwar in der Auswerteeinrichtung über ein Auslösen des Insassenschutzsystems entschieden und das entsprechende Freigabesignal geliefert wird, daß andererseits aber das von der Schutzeinrichtung gelieferte Freigabesignal eine Unterbrechung aufweist bzw noch nicht vorliegt, insbesondere wenn infolge des Aufpralls Fahrzeugstrukturen brechen und kurzzeitig positive Fahrzeugbeschleunigung mit großer Amplitude aufgenommen werden. Bei einer Steueranordnung für den Frontaufprallschutz können solche Unterbrechungen im Freigabesignal der Schutzeinrichtung toleriert werden, da für die Auslösung des Insassenschutzsystems eine relativ lange Zeitspanne zur Verfügung steht und das Freigabesignal der Schutzeinrichtung innerhalb dieser Zeitspanne mit Sicherheit wieder erzeugt werden wird. Bei einer Steueranordnung für den Seitenaufprallschutz steht diese Zeitspanne aus vorgenannten Gründen jedoch nicht zur Verfügung, weshalb bereits beim erstmaligen Auftreten des Freigabesignals der Schutzeinrichtung ein Freigabesignal mit einer Mindestdauer und damit ein Zeitfanster geschaffen werden muß, um bei einem eventuellen Auftreten des Freigabesignals der Auswerteeinrichtung das Insassenschutzsystem sofort auslösen zu können.

Das Freigabesignal der Schutzeinrichtung wird aus diesem Grund einem Zeitglied zugeführt, welches ein Freigabesignal mit einer festgelegten Mindestdauer, vorzugsweise größer 20 ms und insbesondere größer 40 ms erzeugt.

Vorteilhafte Weiterbildungen der Erfindung sind in den Unteransprüchen gekennzeichnet.

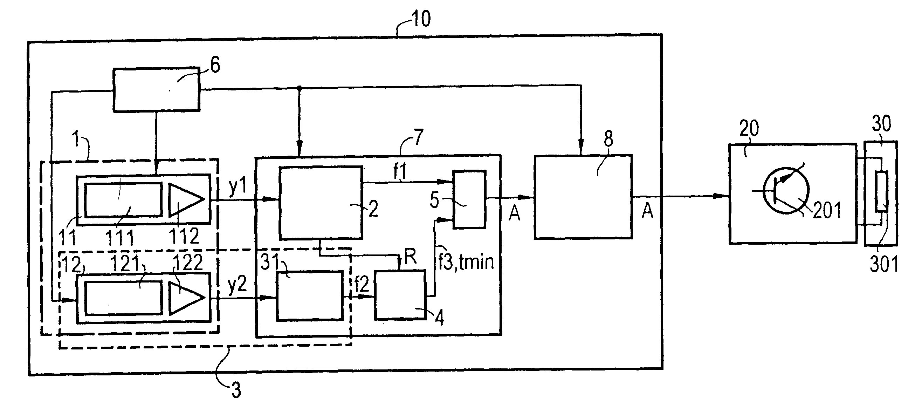

Die Erfindung und ihre Vorteile werden anhand der einzigen Figur näher erläutert.

Die einzige Figur zeigt eine erfindungsgemäße Steueranordnung 10 für ein Insassenschutzsystem 30 zum Seitenaufprallschutz in einem Fahrzeug. Die Steueranordnung 10 ist dabei in einer Fahrzeughälfte des Fahrzeugs angeordnet, eine weitere identisch ausgebildete, aber in der Figur nicht weiter gezeigte Steueranordnung ist in der anderen Fahrzeughälfte angeordnet. Beide Steueranordnungen 10 sind über Leitungen mit einem Zentral-Steuergerät 20 verbunden. Das Zentral-Steuergerät 20 ist wiederum elektrisch leitend mit Zündpillen 301 der Insassenschutzsysteme 30 verbunden. Erkennt die Steueranordnung 10 einen Seitenaufprall ausreichender Schwere, so wird ein Steuersignal A an das Zentral-Steuergerät 20 übermittelt. Im Zentral-Steuergerät 20 ist ein symbolischer Leistungsschalter 201 eingezeichnet, welcher aufgrund des Steuersignals A durchgeschaltet wird. Damit wird einem Zündelement 301 des in der betreffenden Fahrzeughälfte angeordneten Insassenschutzsystems 30 ausreichend Energie zum Auslösen des Insassenschutzsystems 30 zugeführt. Das Insassenschutzsystem 30 ist dabei vorzugsweise als Seitenairbag ausgebildet, der entweder in oder an einem Fahrzeugseitenteil oder auch am Fahrzeugsitz selbst angeordnet ist, kann aber auch ein Kopfairbag, ein Gurtstrammer oder ein sonstiges Rückhaltemittel zum Seitenaufprallschutz sein. Das Zentralsteuergerät 20 weist ferner Beschleunigungssensoren zum Erfassen eines Front- oder Schrägaufpralls auf, sowie eine Auswerteeinheit und weitere Leistungsschalter für weitere Insassenschutzsysteme z.B. zum Frontaufprallschutz. Vorzugsweise wird das Steuersignal A mit dem Signal einer Sitzbelegungserkennung UND-verknüpft, so daß der Seitenairbag für den Beifahrersitz nur dann ausgelöst wird, wenn sowohl das von der dezentral angeordneten Steueranordnung 10 erzeugte Steuersignal A und gleichzeitig ein auf dem Beifahrersitz sitzender Insasse von dem Zentral-Steuergerät 20 erkannt wird.

Die Steueranordnung 10 enthält eine Sensoranordnung 1 mit einem ersten und einem zweiten Beschleunigungsaufnehmer 11 und 12. Der erste und der zweite Beschleunigungsaufnehmer 11 und 12 weisen jeweils ein Sensorelement 111 bzw. 121 sowie einen Signalverstärker 112 bzw. 122 auf. Beide Beschleunigungsaufnehmer 11 und 12 sind quer zur Fahrzeuglängsachse ausgerichtet, so daß sie Querbeschleunigungssignale y1 und y2 liefern. Ist die Fahrzeugstruktur quer zur Fahrzeuglängsachse derart steif ausgebildet, daß an der Fahrzeugseite einwirkenden Stöße weitgehend ungedämpft und verzögerungsfrei zur Fahrzeugmitte übertragen werden, kann die gesamte Steueranordnung 10 im Zentral-Steuergerät 20 angeordnet sein.

Die Steueranordnung 10 enthält ferner eine Spannungsversorgung 6, einen Mikroprozessor 7 und eine Schnittstelle 8 zur Datenübertragung. Die Spannungsversorgung 6 versorgt die beiden Beschleunigungsaufnehmer 11 und 12, den Mikroprozessor 7 und die Schnittstelle 8 mit Energie. Der Mikroprozessor 7 enthält eine Auswerteeinrichtung 2, eine Freigabeeinrichtung 5, und ein Zeitglied 4. Die Steueranordnung 10 enthält ferner eine Schutzeinrichtung 3.

Das erste Querbeschleunigungssignal y1 wird in der Auswerteeinrichtung 2 ausgewertet bzw algorithmisch verarbeitet. Das erste Querbeschleunigungssignal y1 bzw. ein von dem Querbeschleunigungssignal y1 abgeleitetes Signal wird dazu z.B. mit einem zeitlich veränderlichen, ggf auch von dem ersten Querbeschleunigungssignal y1 abhängigen Schwellwert verglichen, wobei ein erstes Freigabesignal f1 an die Freigabeeinrichtung 5 geliefert wird, sobald dieser Schwellwert durch das vom Querbeschleunigungssignal y1 abgeleitete Signal überschritten wird. Wird das erste Freigabesignal f1 erzeugt, ist ein ausreichend schwerer Seitenaufprall erkannt, der ein Auslösen des Insassenschutzsystems 30 erfordert.

Die Schutzeinrichtung 3 enthält den zweiten Beschleunigungsaufnehmer 12 sowie eine Schutzschaltung 31, die im Mikroprozessor 7 realisiert ist. Dabei wird das zweite Querbeschleunigungssignal y2 in der Schutzschaltung 31 ausgewertet. In Abhängigkeit von dem ausgewerteten zweiten Querbeschleunigungssignal y2 wird von der Schutzschaltung 31 ein zweites Freigabesignal f2 an das Zeitglied 4 übertragen.

Die Schutzeinrichtung 3 soll ihr zweites Freigabesignal f2 bereits bei einer geringen auf das Fahrzeug einwirkenden Beschleunigung y liefern. Das zweite Freigabesignal f2 wird bei einem Aufprall in der Regel wesentlich früher erzeugt als das erste Freigabesignal fl, da mit Erzeugen des zweiten Freigabesignals f2 das Vorhandensein einer auf das Fahrzeug einwirkenden Mindestbeschleunigung zum Ausdruck gebracht wird, wobei diese Mindestbeschleunigung alleine noch nicht zum Auslösen des Insassenschutzsystems 30 führen soll. Zum Erzeugen des ersten Freigabesignals f1 ist eine wesentlich höhere auf das Fahrzeug einwirkende Beschleunigung y erforderlich bzw ein charakteristischer Beschleunigungsverlauf.

Das Zeitglied 4 wandelt das gegebenenfalls nur kurz andauernde zweite Freigabesignal f2 in ein drittes Freigabesignal f3 mit einer vorgegebenen Mindestdauer tmin um. Das dritte Freigabesignal f3 wird an die Freigabeeinrichtung 5 geliefert. Von der vorzugsweise als UND-Gatter ausgebildeten Freigabeeinrichtung 5 wird das Steuersignal A an die Schnittstelle 8 der Steueranordnung übertragen, wenn gleichzeitig das erste Freigabesignal f1 und das dritte Freigabesignal f3 vorliegen.

Das Zeitglied 4 ist vorzugsweise als monostabile Kippstufe-auch Monoflop genannt - ausgebildet, kann aber auch als bistabile Kippstufe ausgebildet sein, wobei von der Auswerteeinrichtung 2 ein Rücksetzsignals R für das Flip-Flop erzeugt wird. In jedem Fall wird selbst bei einem Dirac-förmigen zweiten Freigabesignal f2 ein drittes Freigabesignal f3 mit ausreichender Mindestdauer tmin erzeugt, so daß innerhalb dieser Mindestdauer tmin das erstes Freigabesignal f1 zum Auslösen des Rückhaltemittels 30 führt.

Das Zeitglied 4 ist in der Steueranordnung 10 unabhängig von der Art der Schutzeinrichtung 3 ausgebildet: Die vorbeschriebene Schutzeinrichtung 3 bestehend aus dem zweiten Beschleunigungsaufnehmer 12 und der Schutzschaltung 31 ist insofern vorteilhaft, da selbst wenn der erste Beschleunigungsaufnehmer 11 fehlerhaft arbeitet oder ausgefallen ist, eine Fehlauslösung durch einen korrekt arbeitenden zweiten Beschleunigungsaufnehmer 12 vermieden werden kann. Die Schutzeinrichtung 3 kann auch einen mechanischen Beschleunigungsschalter aufweisen, welcher bei einer festgelegten Ansprechschwelle das zweite Freigabesignal f2 erzeugt.

Vorzugsweise wird jedoch als Schutzeinrichtung 3 mit Hilfe des zweiten Beschleunigungsaufnehmers 12 und der Schutzschaltung 31 ein als Safing-Sensor dienender mechanischer Beschleunigungsschalter simuliert. Ein mechanischer Beschleunigungsschalter weist in der Regel eine auslenkbare magnetische seismische Masse auf, die einen magnetisch steuerbaren Schalter betätigt, nachdem sie aufgrund der auf sie einwirkenden Beschleunigung einen festgelegten Weg zurückgelegt hat. Die auf den simulierten mechanischen Beschleunigungsschalter einwirkende Beschleunigung wird durch den zweiten Beschleunigungsaufnehmer 12 geliefert.

Eine solche Simulation eines mechanischen Beschleunigungsschalters weist eine Reihe von Vorteilen gegenüber einem realen mechanischen Beschleunigungsschalter auf: Insbesondere Herstellungstoleranzen, welche zu ungenauen Schwellen und damit zu ungenauem Signalverhalten des realen Beschleunigungsschalters führen, entfallen bei der Simulation. Die fiktive seismische Masse unterliegt im simulierten Modell keiner Reflexion und keinem Prellen. Durch das Zeitglied 4 wird die Schließdauer des simulierten Beschleunigungsschalters künstlich verlängert. Zudem können in einem mathematischen Modell für einen mechanischen Safing-Sensor Parameter wie Schaltweg oder Dämpfung ideal angenommen bzw. nach Wunsch verwendet werden, welche bei real existierenden Schaltern nur äußerst schwer bzw nicht umgesetzt werden können.

Zudem ist im Gegensatz zu den meisten mechanischen Beschleunigungsschaltern der in der Schutzeinrichtung 3 verwendete elektronische Beschleunigungssensor 12 testbar, so daß dessen Funktionsfähigkeit überprüft werden kann. Ein Test der Beschleunigungsaufnehmer 11 und 12 ist einfach durchführbar, da beide Beschleunigungsaufnehmer 11 und 12 zeitlich getrennt voneinander getestet werden können und damit eine Fehlauslösung im Testbetrieb ausgeschlossen wird.

Insbesondere die Sensorparameter Vorspannung, Rückstellkraft und Dämpfung gehen in das mathematische Modell eines Beschleunigungsschalters ein. Durch eine Vorspannung, die z.B. durch eine Feder oder eine magnetische Kraft hervorgerufen wird, wird die seismische Masse des Beschleunigungsschalters erst ab Einwirken einer festgelegten Mindestbeschleunigungskraft aus ihrer Ruhelage ausgelenkt. Durch die Vorspannung wird verhindert, daß der Beschleunigungsschalter bereits bei im normalen Fahrbetrieb auftretenden Vibrationen seine Auslöseschwelle erreicht und das zweite Freigabesignal f2 erzeugt. Durch eine auf die seismische Masse des Beschleunigungsschalters einwirkende Rückstellkraft wird verhindert, daß der Beschleunigungsschalter ein unendlich langes zweites Freigabesignal F2 erzeugt, selbst wenn keine Beschleunigungskraft mehr auf ihn einwirkt. Ferner ist die seismische Masse je nach konstruktiver Ausgestaltung des Beschleunigungsschalters bei ihrer Auslenkung einer Dämpfung unterworfen.

In der Schutzschaltung 31 wird eine von der Ausführungsform des zu simulierenden Safing-Sensors abhängige Differentialgleichung aufgestellt und ausgewertet. Mit der nachfolgenden Differentialgleichung wird ein Safing-Sensor simuliert, bei dem sowohl die Sensorparameter Dämpfung, Rückstellkraft und Vorspannung nicht vernachlässigbare Größen darstellen. Die Beschleunigung

$$\ddot{x}(t)$$

einer fiktiven seismischen Masse eines solchen simulierten Safing-Sensors wird durch folgende Gleichung beschrieben:

$$\ddot{x}(t) = -2\omega_o D\dot{x}(t) - \omega_o^2 x(t) - F_o/m + y(t)$$

mit

x(t) :       der von der fiktiven seismischen Masse zurückgelegte-Weg zum Zeitpunkt t,
$\dot{x}(t)$       die von der fiktiven seismischen Masse erzielte Geschwindigkeit zum Zeitpunkt t,
$\ddot{x}(t)$       die Beschleunigung der fiktiven seismischen Masse zum Zeitpunkt t,
$\omega_o$ :       Resonanzfrequenz des Beschleunigungsschalters,
D :       Dämpfungsfaktor,
$F_o$ :       Vorspannungskraft,
m :       Masse der fiktiven der seismischen Masse,

| | |
|---|---|
| $-2\omega_o D\dot{x}(t)$ | Dämpfung, |
| $-\omega_o x^2(t)$ : | Rückstellkraft, |
| $-F_o/m$: | Vorspannung |
| y(t) bzw. y1(t) oder y2(t): | mit ersten bzw. zweiten Beschleunigungsaufnehmer 11 oder 12 aufgenommenes erstes Querbeschleunigungssignal y1 oder zweites Querbeschleunigungssignal y2. |

Zur Lösung der Differentialgleichungen werden in der Schutzschaltung 31 folgende Anfangsbedingungen vorgegeben:

Die Auslenkung der fiktiven seismischen Masse zum Zeitpunkt t=0 ist Null sowie die Geschwindigkeit der fiktiven seismischen Masse zum Zeitpunkt t=0 ist Null. In der Schutzschaltung 31 wird nun insbesondere numerisch die Differentialgleichung nach dem von der fiktiven seismischen Masse zurückgelegten Weg x(t) aufgelöst. Die Schutzeinrichtung 3 liefert das zweite Freigabesignal f2, wenn der von der fiktiven seismischen Masse zurückgelegte Weg x(t) größer als ein vorgegebener Schwellwert ist. Diese Bedingung zum Erzeugen des zweiten Freigabesignals f2 entspricht der Schaltbedingung des realen Safing-Sensor, der ein Freigabesignal liefert, wenn die seismische Masse nach dem Zurücklegen eines einen festgelegten Weges einen magnetsich steuerbaren Schalter betätigt.

Abhängig von der Rechenleistung des verwendeten Mikroprozessors 7 bzw. der Schutzschaltung 31 und des konstruktiven Aufbaus des zu simulierenden Safing-Sensors kann ein einfacheres Modell für einen Safing-Sensor verwendet werden: Beispielsweise wird nur die Vorspannung der fiktiven seismischen Masse berücksichtigt, so daß die zugehörige Differentialgleichung lautet:

$$\ddot{x}(t) = y(t) - F_o / m$$

Weist der zu simulierende Safing-Sensor keine Vorspannung, dafür aber eine ausreichende Dämpfung und eine zusätzliche Rückstellkraft auf, so lautet die zu lösende Differentialgleichung:

$$\ddot{x}(t) = -2\omega_o D\dot{x}(t) - \omega_o^2 x(t) + y(t)$$

**Patentansprüche**

1.  Steueranordnung für ein Insassenschutzsystem zum Seitenaufprallschutz in einem Fahrzeug,

    -   mit einer Sensoranordnung (1) für eine auf das Fahrzeug einwirkende Querbeschleunigung (y),
    -   mit einer Auswerteeinrichtung (2) zum Auswerten der Querbeschleunigung (y) und zum Erzeugen eines ersten Freigabesignals (f1) in Abhängigkeit davon,
    -   mit einer Schutzeinrichtung (3) zum Auswerten der Querbeschleunigung (y) und zum Erzeugen eines zweiten Freigabesignals (f2) in Abhängigkeit davon,
    -   mit einem Zeitglied (4) zum Erzeugen eines dritten Freigabesignals (f3) mit einer festgelegten Mindestdauer (tmin) aus dem zweiten Freigabesignal (f2), und
    -   mit einer Freigabeeinrichtung (5) zum Erzeugen eines Steuersignals (a) für das Insassenschutzsystem (30) in Abhängigkeit vom dem ersten Freigabesignal (f1) und dem dritten Freigabesignal (f3).

    dadurch gekennzeichnet,

    -   dass die Sensoranordnung (1) einen ersten elektronischen Beschleunigungsaufnehmer (11) und einen zweiten elektronischen Beschleunigungsaufnehmer (12) aufweist,
    -   dass in der Auswerteeinrichtung (2) ein von dem ersten Beschleunigungsaufnehmer (11) geliefertes erstes Querbeschleunigungssignal (y1) ausgewertet und in Abhängigkeit davon das erste Freigabesignal (f1) erzeugt wird, und
    -   dass in der Schutzeinrichtung (3) ein von dem zweiten Beschleunigungsaufnehmer (12) geliefertes zweites Querbeschleunigungssignal (y2) ausgewertet und in Abhängigkeit davon das zweite Freigabesignal (f2) erzeugt wird.

2.  Steueranordnung nach Anspruch 1, bei der das zweite Querbeschleunigungssignal (y2) in der Schutzschaltung (3) integriert und mit einem Schwellwert (S1) verglichen wird, und bei der das zweite Freigabesignal (f2) erzeugt wird, wenn der Schwellwert (S1) von dem integrierten Querbeschleunigungssignal (y1,y2) überschritten wird.

3.  Steueranordnung nach einem der vorhergehenden Ansprüche, bei der in der Schutzschaltung (31) ein mechanischer Beschleunigungsschalter simuliert wird, bei dem unter Einwirkung der aufgenommenen Querbeschleunigung (y) eine fiktive seismische Masse ausgelenkt wird, wobei das zweite Freigabesignal (f2) erzeugt wird, wenn die fiktive seismische Masse einen festgelegten Weg zurückgelegt hat.

4.  Steueranordnung nach Anspruch 1, bei der je eine Sensoranordnung (1) in jeder Fahrzeughälfte angeordnet ist.

**5.** Steueranordnung nach Anspruch 1, bei der das Zeitglied (4) als Kippschaltung ausgebildet ist.

**6.** Steueranordnung nach Anspruch 1, bei der das Steuersignal (A) zum Auslösen des Insassenschutzsystems (30) bestimmt ist.

## Claims

**1.** Control arrangement for an occupant protection system for side impact protection in a vehicle,

- having a sensor arrangement (1) for a transverse acceleration (y) acting on the vehicle,
- having an evaluation device (2) for evaluating the transverse acceleration (y) and for generating a first enable signal (f1) as a function thereof,
- having a protection device (3) for evaluating the transverse acceleration (y) and for generating a second enable signal (f2) as a function thereof,
- having a timing element (4) for generating a third enable signal (f3) with a fixed minimum duration (tmin) from the second enable signal (f2), and
- having an enabling device (5) for generating a control signal (a) for the occupant protection system (30) as a function of the first enable signal (f1) and the third enable signal (f3),

characterized

- in that the sensor arrangement (1) has a first electronic acceleration pickup (11) and a second electronic acceleration pickup (12),
- in that a first transverse acceleration signal (y1) supplied by the first acceleration pickup (11) is evaluated in the evaluation device (2) and the first enable signal (f1) is generated as a function thereof, and
- in that a second transverse acceleration signal (y2) supplied by the second acceleration pickup (12) is evaluated in the protection device (3) and the second enable signal (f2) is generated as a function thereof.

**2.** Control arrangement according to Claim 1, in which the second transverse acceleration signal (y2) is integrated in the protection device (3) and compared with a threshold value (S1), and in which the second enable signal (f2) is generated when the threshold value (S1) is exceeded by the integrated transverse acceleration signal (y1, y2).

**3.** Control arrangement according to one of the preceding claims, in which there is simulated in the protection circuit (31) a mechanical acceleration switch in the case of which a fictional seismic mass is deflected under the action of the recorded transverse acceleration (y), the second enable signal (f2) being generated when the fictional seismic mass has traversed a fixed distance.

**4.** Control arrangement according to Claim 1, in which one sensor arrangement (1) each is arranged in each half of the vehicle.

**5.** Control arrangement according to Claim 1, in which the timing element (4) is designed as a flipflop.

**6.** Control arrangement according to Claim 1, in which the control signal (A) is intended to trigger the occupant protection system (30).

## Revendications

**1.** Dispositif de commande pour un système de protection des occupants d'un véhicule contre des collisions latérales,

- avec un dispositif de détecteurs (1) pour une accélération transversale (y) appliquée sur le véhicule,
- avec un dispositif d'évaluation (2) pour analyser l'accélération transversale (y) et pour générer un premier signal de validation (f1) en fonction de cette accélération,
- avec un dispositif de protection (3) pour analyser l'accélération transversale (y) et pour générer un deuxième signal de validation (f2) en fonction de cette accélération,
- avec un élément de temporisation (4) pour générer, à partir du deuxième signal de validation (f2), un troisième signal de validation (f3) ayant une durée minimum définie (tmin) et

- avec un dispositif de validation (5) pour générer un signal de commande (a) pour le système de protection des occupants (30) en fonction du premier signal de validation (f1) et du troisième signal de validation (f3)

**caractérisé par le fait**

- que le dispositif de détecteurs (1) comporte un premier détecteur électronique d'accélération (11) et un deuxième détecteur électronique d'accélération (12),
- que, dans le dispositif d'évaluation (2), on analyse un premier signal d'accélération transversale (y1), délivré par le premier détecteur électronique d'accélération (11), en fonction duquel on génère le premier signal de validation (f1) et
- que, dans le dispositif de protection (3), on analyse un deuxième signal d'accélération transversale (y2), délivré par le deuxième détecteur électronique d'accélération (12), en fonction duquel on génère le deuxième signal de validation (f2).

2. Dispositif de commande selon la revendication 1 dans lequel on procède, dans le circuit de protection (3), à l'intégration du deuxième signal d'accélération transversale (y2) et on le compare à une valeur de seuil (S1) et dans lequel le deuxième signal de validation (f2) est généré lorsque la valeur de seuil (S1) est dépassée par le signal intégré d'accélération transversale (y1, y2).

3. Dispositif de commande selon l'une des revendications précédentes, dans lequel on simule, dans le circuit de protection (31), un commutateur mécanique d'accélération dans lequel une masse sismique fictive est déviée sous l'influence de l'accélération transversale détectée (y), le deuxième signal de validation (f2) étant généré lorsque la masse sismique fictive a parcouru un trajet défini.

4. Dispositif de commande selon la revendication 1, dans lequel on place un dispositif de détecteurs (1) dans chaque moitié du véhicule.

5. Dispositif de commande selon la revendication 1, dans lequel l'élément de temporisation (4) est conçu sous forme de bascule électronique.

6. Dispositif de commande selon la revendication 1, dans lequel le signal de commande (A) est destiné à déclencher le système de protection des occupants (30).